# EUROPEAN PATENT APPLICATION

(11) **EP 3 032 396 A1**
(43) Date of publication of application: **15.06.2016**
(21) Application number: 14200156.9
(22) Date of filing: 23.12.2014
(51) Int. Cl.: G06F 3/06, H04L 29/08

(54) **OSSITL OpenStack swift auditing for tape library**

(30) Priority: 09.12.2014 US 201414564255
(71) Applicant: BDT Media Automation GmbH, 78628 Rottweil (DE)
(72) Inventor: Kleber, Andreas, 78083 Dauchingen (DE); Bucher, Franz, 78052 Villingen-Schwenningen (DE); Hauser, Stefan, 78727 Oberndorf am Neckar (DE)
(74) Representative: 2K Patentanwälte Blasberg Kewitz & Reichel

(57) **Abstract**

1. A system for providing a Swift Storage Node comprising :
a)a media library, comprising:
- one or more drives;
- one or more tapes formatted according to the Linear Tape File System (LTFS); and

b) a management system connected over a first interface to the media library and over a second interface to a Swift Proxy Server, comprising a processor, a cache data store and a set of computer instructions executable on the processor to:
- provide a Swift-On-Disk File System Application Programming Interface (API) over the second external interface;
- use Virtual File System (VFS) based on the cache data store and the tapes with LTFS to be mapped to the Swift-On-Disk File standard, wherein swift objects are stored on the tapes using LTFS;
- enable the random access based Swift Auditor process for serial access based tape storage by bridging the SWIFT auditor by auditing the objects on tape by using the VERIFY SCSI command to complete a low-level check of blocks corresponding to the objects on the tape.

## Description

### Field of the Invention

This document describes the concept for a seamless integration of a Tape Library into an OpenStack Swift Storage infrastructure. The tape library should act as a standard storage node in a Swift Object Storage cluster without modifications of the generic structure and software components of Swift. Swift supports a basic plugin concept "Pluggable On-Disk Back-end API' to integrate individual data storage implementations for different storage device types.

It is intended to provide a way to integrate a tape library with its legacy SCSI/SAS interfaces, which are not supported directly anymore, in the new Cloud based infrastructures.

### Background of Invention

Businesses, governmental organizations and other entities are increasingly saving large volumes of data necessary for daily operations. The data represents a significant asset for these entities. Consequently, data loss, whether accidental or caused by malicious activity, can be costly in terms of wasted manpower, loss of goodwill from customers, loss of time and potential legal liability. To ensure proper protection of data for business and legal purposes (e.g., to ensure quick recovery of data in the event of a disaster, to comply with document retention requirements, etc.), these entities often back up data to a physical media, such as magnetic tapes or optical disks on a regular basis.
Traditional backup systems placed an application server, backup server, source device, destination device and a local area network ("LAN") in the data path of backup operations. Under these systems, the LANs were becoming overburdened by the amount of data being copied. Often the backup window (the period in which data unavailable for normal operations in order to permit backup) was too short to achieve a complete backup of data. Accordingly, many entities implemented Storage Area Networks ("SAN") to relieve the burden of mass data storage and backup from the LAN, freeing the LAN for more immediate data storage and manipulation operations. In SANs, data from multiple machines on a network may be backed up to a remote media library. Centralized data backup allows storage problems to be identified at one location and has the advantage of increased efficiency.

One example of a media library commonly used in enterprise backup systems is a magnetic tape library. In a typical magnetic tape library, tapes are contained in cartridges and the tape library contains multiple cartridge slots in which tape cartridges can be stored. The tape cartridges are physically moved between cartridge slots and tape drives by a robot. The robot is controlled by access commands received from the host devices on the network. When specific data is required, the host device determines which cartridge slot contains the tape cartridge that holds the desired data. The host device then transmits a move-element command to the robot and the robot moves the tape cartridge.
In a SCSI/SAS tape library, for example, devices that are part of the library are typically addressed by target number and logical unit numbers ("LUN"). Thus, each drive and robot of a tape library typically has a target number and LUN. Cartridge slots, on the other hand, are addressed by element numbers that are used by the robot to locate the slots. Because the robot also places tape cartridges in the drives, each drive is also associated with an element number. If multiple tape libraries are connected to a single device (e.g. a fibre channel to SCSI router, etc.) the tape libraries may be further addressed by bus number.

In current tape library systems, each tape library may present itself as an independent entity on the network. Each host in these systems maintains a view (i.e., a table of target numbers, LUNs and element numbers) of each of the tape libraries. Using this address information a host can format commands to the tape library to perform read/write, backup and other operations. In order to coordinate activities, hosts must cooperate with each other in issuing these commands.
Enabling cooperation, however, requires some form of application to arbitrate between the various hosts or applications that are accessing the tape library. Thus, it may be necessary to employ some form of application (such as a backup application, like Microsoft Software Initiator, Backup Exec/Symantec etc.) to read and write tapes in a tape library. Additionally, many of these issues may only be dealt with in software if the hosts use the same application or at least compatible applications. For example, if two hosts use the same backup application to store their data to tape, the application can coordinate the access requests of the two hosts so that both are backed up to the tape library. If, on the other hand, the two hosts use different backup applications, the applications will most likely not be able to coordinate their actions to ensure that both of the hosts are properly backed up, since they were probably independently designed and are consequently incompatible. Thus, to prevent conflicts between hosts, each host must typically use the same application to access a shared tape library. This can be inefficient as individual tape libraries cannot store data from multiple applications. Moreover, the files written on a tape by a backup application are written in a format proprietary to that backup application. Thus, to restore or otherwise access files on those tapes, the same backup application is required.

Recently, however, the Ultrium Linear Tape Open (LTO)-5 and later, specification for tapes (hereby incorporated by reference in its entirety for all purposes) has included support for partitioning. The Linear or Long Term File System (LTFS) Format Specification by IBM and Ultrium (also hereby fully incorporated by reference in its entirety for all purposes) makes use of this partitioning support to define a tape format. The LTFS tape format defines a file system for LTO-5 tapes using an extensible Markup Language (XML) schema architecture and was utilized in conjunction with the IBM LTO Gen5 and higher Drive. This file system support allows the use of an LTFS-formatted tape as if it were a file system. Files and directories may appear in a directory listing, files may be dragged and dropped from tape, data may be accessed at the file level, etc. With LTFS, tape media can be used like other storage media (e.g. flash drive, hard disk drives, etc.).

Consequently, while it previously was necessary to make use of a backup application to write and read tapes, the introduction of LTFS has simplified the storing and retrieval of files on tape by reducing such operations to a copy. Furthermore, any operating system that includes LTFS support can mount an LTFS formatted tape and read and write the files thereon.

Although LTFS makes the use of a single tape much simpler, it does, however, have limitations. As defined in the current specification the LTFS file system may be limited to a single tape. If it is desired to use multiple LTFS tapes these tapes are mounted one at a time or additional support is provided. While the capacity of an LTO-5 tape is relatively high (e.g., around 1500 GB to 3.0 TB or greater) in the realm of business data and backup applications this is a major restriction.

Another significant limitation of the LTFS specification is that it does not include support for tape libraries. The LTFS specification only defines a single tape/tape drive combination. After the tape drive is loaded with the tape the file system may be mounted after which it becomes useable. Manual intervention is required to unload one tape and load another if access to files on a different tape is desired.

It is thus desired to effectively leverage tape libraries to provide storage in conjunction with a networked based file system and, particularly, to provide a networked based file system utilizing tape libraries that employ LTFS.

US 8 527 561 discloses the approach to implement a NAS (network attached storage) based on CIFS or NFS Protocol etc. with a tape library. These protocols allow a concurrent access of multiple devices over Ethernet to the device.

OpenStack (www.openstack.org)is a cloud operating system that controls large pools of compute, storage, and networking resources throughout a datacentre, all managed through a dashboard that gives administrators control while empowering their users to provision resources through a web interface.

OpenStack is an open source infrastructure as a service (laaS) initiative for creating and managing large groups of virtual private servers in a cloud computing environment.

The goals of the OpenStack initiative are to support interoperability between cloud services and allow businesses to build Amazon-like cloud services in their own data centres. OpenStack, which is freely available under the Apache 2.0 license, is often referred to in the media as "the Linux of the Cloud" and is compared to Eucalyptus and the Apache CloudStack project, two other open source cloud initiatives.

OpenStack officially became an independent non-profit organization in September 2012. The content of the OpenStack definitions and documents at (www.openstack.org) are included by reference.

In the following the components of OpenStack are explained.

### Nova:

Nova is the primary computing engine behind OpenStack. It is a "fabric controller," which is used for deploying and managing large numbers of virtual machines and other instances to handle computing tasks.

### Cinder:

Cinder is a block storage component, which is more analogous to the traditional notion of a computer being able to access specific locations on a disk drive. This more traditional way of accessing files might be important in scenarios in which data access speed is the most important consideration.

### Swift:

Swift is a storage system for objects and files. Rather than the traditional idea of a referring to files by their location on a disk drive, developers can instead refer to a unique identifier referring to the file or piece of information and let OpenStack decide where to store this information. This makes scaling easy, as developers don't have the worry about the capacity on a single system behind the software. It also allows the system, rather than the developer, to worry about how best to make sure that data is backed up in case of the failure of a machine or network connection.

In the following the Swift components and concepts will be discussed.

### Swift Storage Concept

Swift offers cloud storage software where you can store and retrieve lots of data with a simple API. It's built for scale and optimized for durability, availability, and concurrency across the entire data set. Swift is ideal for storing unstructured data that can grow without bound. Swift has an extremely scalable architecture, based on standard commodity HW and basic storage systems.

### Swift Components:

The following sub chapters are copied from the OpenStack Developer Documentation to explain the general Swift concept.

### Swift-Proxy Server

The Proxy Server is responsible for tying together the rest of the Swift architecture. For each request, it will look up the location of the account, container, or object in the ring (see below) and route the request accordingly. The public API is also exposed through the Proxy Server.

A large number of failures are also handled in the Proxy Server. For example, if a server is unavailable for an object PUT, it will ask the ring for a handoff server and route there instead.

When objects are streamed to or from an object server, they are streamed directly through the proxy server to or from the user- the proxy server does not spool them.

### Swift -The Ring

A ring represents a mapping between the names of entities stored on disk and their physical location. There are separate rings for accounts, containers, and objects. When other components need to perform any operation on an object, container, or account, they need to interact with the appropriate ring to determine its location in the cluster.

The Ring maintains this mapping using zones, devices, partitions, and replicas. Each partition in the ring is replicated, by default, 3 times across the cluster, and the locations for a partition are stored in the mapping maintained by the ring. The ring is also responsible for determining which devices are used for handoff in failure scenarios.

Data can be isolated with the concept of zones in the ring. Each replica of a partition is guaranteed to reside in a different zone. A zone could represent a drive, a server, a cabinet, a switch, or even a datacentre.

The partitions of the ring are equally divided among all the devices in the Swift installation.

When partitions need to be moved around (for example if a device is added to the cluster), the ring ensures that a minimum number of partitions are moved at a time, and only one replica of a partition is moved at a time.

Weights can be used to balance the distribution of partitions on drives across the cluster. This can be useful, for example, when different sized drives are used in a cluster.

The ring is used by the Proxy server and several background processes (like replication).

### Swift- Object Server:

The Object Server is a very simple blob storage server that can store, retrieve and delete objects stored on local devices. Objects are stored as binary files on the filesystem with metadata stored in the file's extended attributes (xattrs). This requires that the underlying filesystem choice for object servers support xattrs on files. Some filesystems, like ext3, have xattrs turned off by default. Each object is stored using a path derived from the object name's hash and the operation's timestamp. Last write always wins, and ensures that the latest object version will be served. A deletion is also treated as a version of the file (a 0 byte file ending with ".ts", which stands for tombstone). This ensures that deleted files are replicated correctly and older versions don't magically reappear due to failure scenarios.

### Swift- Container Server:

The Container Server's primary job is to handle listings of objects. It doesn't know where those object's are, just what objects are in a specific container. The listings are stored as sqlite database files, and replicated across the cluster similar to how objects are. Statistics are also tracked that include the total number of objects, and total storage usage for that container.

### Swift- Account Server:

The Account Server is very similar to the Container Server, excepting that it is responsible for listings of containers rather than objects.

### Swift- Replication:

Replication is designed to keep the system in a consistent state in the face of temporary error conditions like network outages or drive failures.

The replication processes compare local data with each remote copy to ensure they all contain the latest version. Object replication uses a hash list to quickly compare subsections of each partition, and container and account replication use a combination of hashes and shared high water marks. Replication updates are push based. For object replication, updating is just a matter of rsyncing files to the peer. Account and container replication push missing records over HTTP or rsync whole database files. The replicator also ensures that data is removed from the system. When an item (object, container, or account) is deleted, a tombstone is set as the latest version of the item. The replicator will see the tombstone and ensure that the item is removed from the entire system.

### Swift-Updaters:

There are times when container or account data cannot be immediately updated. This usually occurs during failure scenarios or periods of high load. If an update fails, the update is queued locally on the file system, and the updater will process the failed updates. This is where an eventual consistency window will most likely come in to play. For example, suppose a container server is under load and a new object is put in to the system. The object will be immediately available for reads as soon as the proxy server responds to the client with success. However, the container server did not update the object listing, and so the update would be queued for a later update. Container listings, therefore, may not immediately contain the object.In practice, the consistency window is only as large as the frequency at which the updater runs and may not even be noticed as the proxy server will route listing requests to the first container server which responds. The server under load may not be the one that serves subsequent listing requests - one of the other two replicas may handle the listing.

A key aspect of Swift is that it acknowledges that failures happen and is built to work around them. When account, container or object server processes are running on node, it means that data is being stored there. That means consistency services will also be running on those nodes to ensure the integrity and availability of the data.

The two main consistency services are auditors and replicators. There are also a number of specialized services that run in support of individual server process, e.g., the account reaper that runs where account server processes are running.

### Swift Replicators:

Swift's durability and resilience to failure depends in large part on its replicas. The more replicas used, the more protection against losing data when there is a failure. This is especially true in clusters that have separate datacenters and geographic regions to spread the replicas across.

Replicas, mean that partitions are replicated. Most commonly a replica count of three is chosen. During the initial creation of the Swift rings, every partition is replicated and each replica is placed as uniquely as possible across the cluster. Each subsequent rebuilding of the rings will calculate which, if any, of the replicated partitions need to be moved to a different drive. Part of partition replication including designating handoff drives. When a drive fails, the replication/auditing processes notice and push the missing data to handoff locations. The probability that all replicated partitions across the system will become corrupt (or otherwise fail) before the cluster notices and is able to push the data to handoff locations is very small, which is why Swift is durable.

A proxy server processes using a hash of the data's storage location to determine where in the cluster that data was located.

Account, container, and object replicator processes run in the background on all nodes that are running the corresponding services. A replicator will continuously examine its local node and compare the accounts, containers, or objects against the copies on other nodes in the cluster. If one of other nodes has an old, corrupted or missing copy, then the replicator will send a copy of its local data out to that node. Replicators only push their local data out to other nodes; they do not pull in remote copies in if their local data is missing or out of date.

The replicator also handles object and container deletions. Object deletion starts by creating a zero-byte tombstone file that is the latest version of the object. This version is then replicated to the other nodes and the object is removed from the entire system.

Container deletion can only happen with an empty container. It will be marked as deleted and the replicators push this version out.

### Swift-Auditors:

Auditors crawl the local server checking the integrity of the objects, containers, and accounts. If corruption is found {in the case of bit rot, for example), the file is quarantined, and replication will replace the bad file from another replica. If other errors are found they are logged (for example, an object's listing can't be found on any container server it should be).

Auditors run in the background on every storage node in a Swift cluster and continually scan the disks to ensure that the data stored on disk has not suffered any bit-rot or file system corruption. There are account auditors, container auditors and object auditors which run to support their corresponding server process.

If an error is found, the auditor moves the corrupted object to a quarantine area.

Swift provides 3 different types of auditing services:
- Swift account auditor
- Swift container auditor
- Swift object auditor

The account auditor will open all databases (most of them are sqlite) of an account server and checks that all databases are valid.

The container auditor will check all containers for their integrity (also using the sqlite databases).

The object auditor will check all object data, making sure that its meta data is valid, checks if the size of the object data is correct and checks the object's MD5 hash against the hash stored in the object's meta data.

The application will focus on the object auditor, because object data will be saved to tape for a tape based Swift storage node, and therefore needs to be handled differently by the object auditor.

Account and container data will most likely not be moved to tape, so the account and container auditors are not handled in detail, since it is possible to be moved to tape, so the account and container auditors do not need any modification.

### Summary of Invention

The invention discloses a system for providing a Swift Storage Node comprising :
A system for providing a Swift Storage Node
   comprising :
   a)a media library, comprising:
      - one or more drives;
      - one or more tapes formatted according to the Linear Tape File System (LTFS); and
   b) a management system connected over a first interface to the media library and over a second interface to a Swift Proxy Server, comprising a processor, a cache data store and a set of computer instructions executable on the processor to:
      - provide a Swift-On-Disk File System Application Programming Interface (API) over the second external interface;
      - use Virtual File System (VFS) based on the cache data store and the tapes with LTFS to be mapped to the Swift-On-Disk File standard, wherein swift objects are stored on the tapes using LTFS;
      - enable the random access based Swift Auditor process for serial access based tape storage by bridging the SWIFT auditor by auditing the objects on tape by using the VERIFY SCSI command to complete a low-level check of blocks corresponding to the objects on the tape.

In another embodiment if the VERIFY SCSI command generates an information that all bocks on the tape are defined as being consistent, the audit is successful and the system is configured to provide a corresponding response to the swift auditor.

In another embodiment the system is configured that if a bad block is determined, a LTFS index of the tape has to be analyzed to determine a file in which the object is stored corresponding to the corrupted block, and to create a stub-file corresponding the object in the cache data store. The swift auditor will detect the created stub-file, consider it as corrupted and move it to the quarantine folder. A swift replicator will replace the stub-file/dummy file by a file with a consistent object in the cache data store.

After a new consistent object arrived in the cache data store it will be copied to the tape automatically controlled by the VFS handler.

In another embodiment the system the LTFS has two partitions on the tape, one data partition and one index partition, wherein the system is configure to use the VERIFY SCSI command on the data partition, where the object is stored.

In another embodiment the system is configured to set a byte compare (BYTCMP) bit of zero of the VERIFY SCSI command, which specifies the verification is a verification of blocks on the medium comprising, CRC, ECC or other Verification methods. So no data has to be copied to or from the drive. The drive can work stand alone with the drive at maximum speed.

In another embodiment a LTFS the system is configured to check condition for an incorrect length block for a file mark by investigating the returned sense data. The Block Level Verfiy is performed from File Mark to File Mark until the end is reached. Each File Mark determines the end or the beginning of the file.

In another embodiment a LTFS index of a tape is stored in the memory of the management system, so that an access to at least a first block of each file storing an object on LTFS for the VERIFY SCSI command is possible. This allows a faster access to the block where the VERIFY SCSI command has to be executed.

In another embodiment the VFS is configured to unify several LTFS on tapes and the cache data store as a one large unified storage area to provide this unified storage area to the Swift-On-Disk File standard. For an external user only one complete storage area is offered being the sum of all tapes available for the VFS. In general the cache data store is only redundant and improves the access time to the objects stored or the additional data.

In a possible implementation an adapted virtual file system (VFS) keeps the SWIFT structure and a metadatabase. Further this adapted virtual file system (VFS) allows marking elements of the folder structure by help of a variable and definable set of rules. Once marked, elements of the folder structure can be stored either to tape or disk. Logically all elements stay in the standard SWIFT folder structure in the VFS, but physically elements which have been marked for tape storage by help of rules, will be stored on tape. The actual storage location of the respective elements is reflected in the metadatabase. The rules can e.g. be triggered by time, file sizes, file types, frequency of access etc..

In a possible embodiment tapes copies are generated in the background for redundant data storage. Based on this approach data loss can be minimized and also copies of the tapes can be exported out of the library, to take them away for safety reasons.

The cache management can use technologies well known in the field, wherein the objects in the cache data store being removed if a copy of the object is on the tapes and a cache-rule determines the object to be removed.

In a possible embodiment the library is partitioned by aggregating a number of drives and a number of tapes smaller than the total number of drives and the total number tapes to a partition, and each partition providing a separate Swift-On-Disk File System Application Programming Interface (API) over the second external interface. This allows to provide with a single devices multiple API.

In a possible embodiment the device provides a user interface to determine one or more of the following parameters: partitioning, cache size, cache-rules, tapes to be copied, export of tapes.

In a possible embodiment the first interface is one of the following: scsi, fc, iscsi, sas
and wherein the second interface is one of the following:
RESTful interface, SWIFT Storage Node interface including account, container and object services.

By this implementation Tape library interface looks like as a standard generic (disk-based) Storage Node interface (tape library is transparent to Object Store software). There is no modification on the Object Store software (e.g. SWIFT) necessary, all common features of an Object Storage (incl. Auditing, Replication, Recovery) are still supported. The virtual SWIFT Standard Storage Node is being supported by an adapted virtual file system (VFS) allowing rule based data storage to tape by using LTFS data format to write/read files directly to tape.

SWIFT consists of a RESTful interface for Object Store Storage node supporting RESTful API http methods (GET, PUT, POST, DELETE) to read/write data from/to tapes in a tape media library.

The Virtual File System implementation is used to combine the local LTFS based files systems of several tapes to one joined root file system (e.g. to combine 5 LTO6 tapes to a file system with an overall capacity of 5x2,5TB=12,5TB) allowing reading and writing files directly to tape.

The Virtual File System implementation includes a metadatabase, which e.g. could be file based and stores all mappings of the files on the affected tapes (Object Store Software won't know on which tape a file was written, just the VFS Software will know).

The Virtual File System implementation includes a write cache to queue files until the target tape becomes available for writing (load the right tape into an available tape drive)

The Virtual File System implementation includes a read cache to ensure fast read access.

A Tape Library management controller software/hardware which controls the tape library (e.g. load/unload tapes to the tape drives) is also implemented. The Library management controller keeps track on the drives used and the tapes in the slots. It provides status information about the tapes in the drives, and the barcodes of the tapes. It is used to transport the tapes into the drives and from the drives. Also the Library management controller is used to export tapes to a mail slot which allows removing the tape from the library. Also an unlocking of the magazines is handled by the controller.

### Brief Description of Drawings

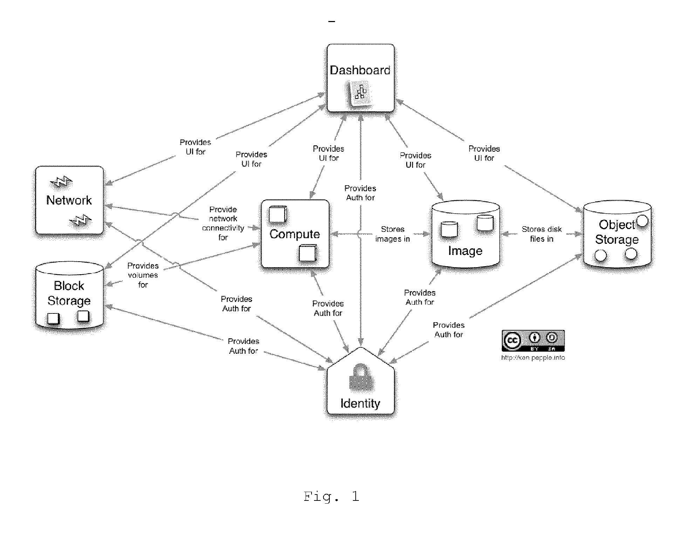

Fig. 1 shows a OpenStack structure with Block Storage and Object Storage;

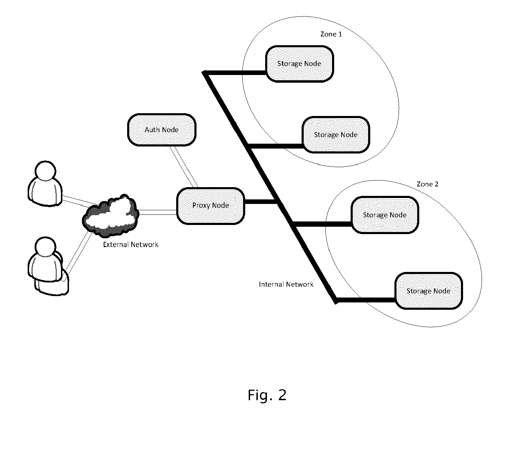

Fig. 2 shows the swift hardware architecture;

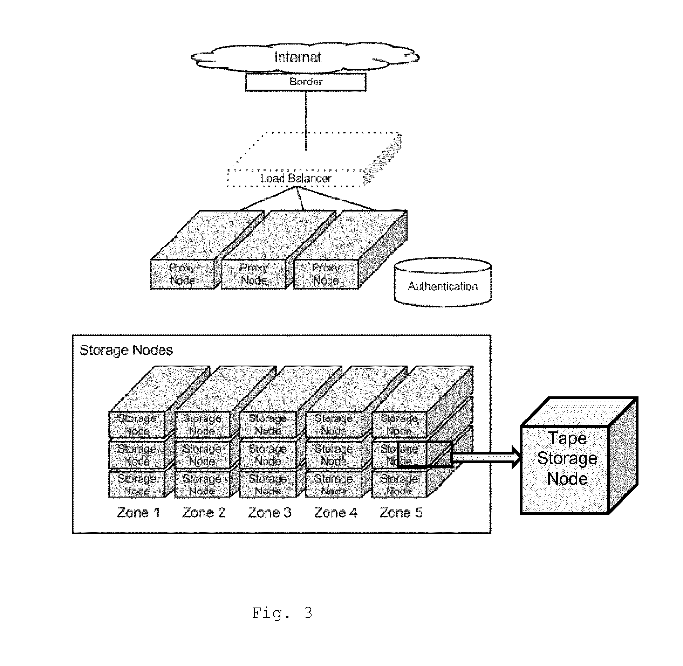

Fig. 3 shows the integration of a Tape-Storage-Node into the Storage Nodes;

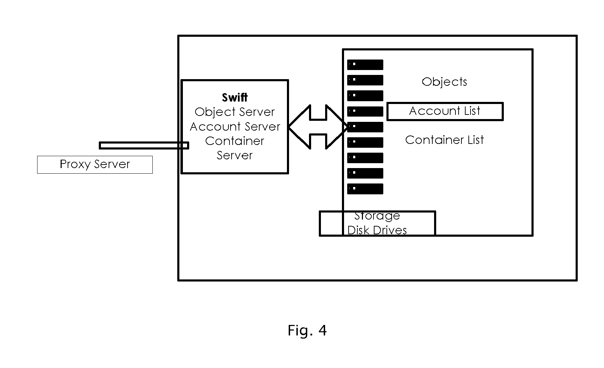

Fig. 4 shows a standard storage node architecture;

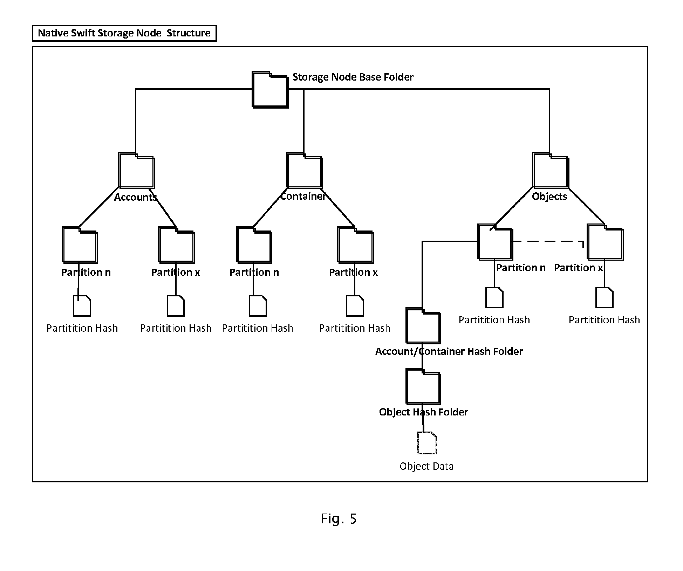

Fig. 5 shows a native swift storage node structure;

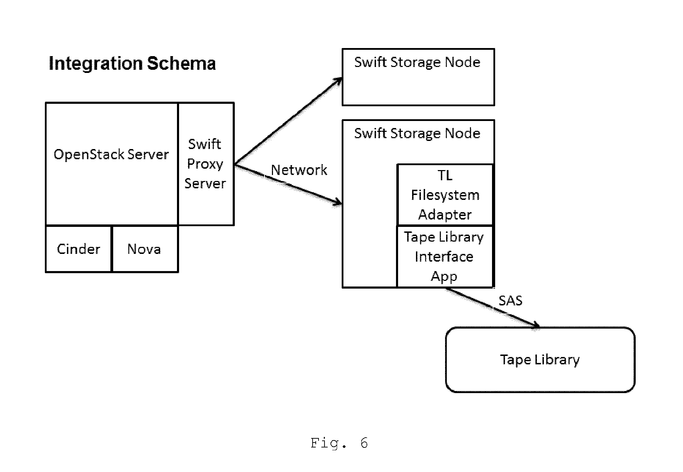

Fig. 6 shows the integration of a tape library into a Swift Storage Node;
Fig. 7 shows the internal structure of the storage node using the tape library;

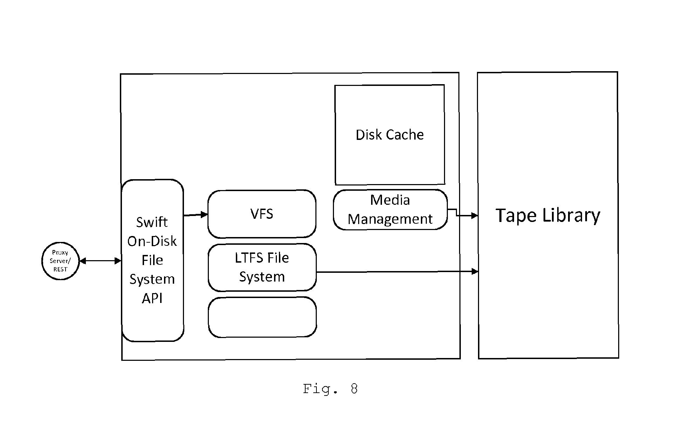

Fig.8 shows the internal structure using a standard operating system like linux;

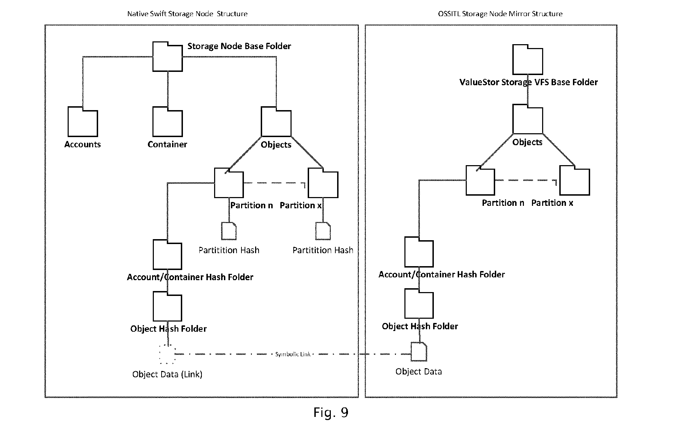

Fig. 9 shows a storage node structure using links for objects on tape;

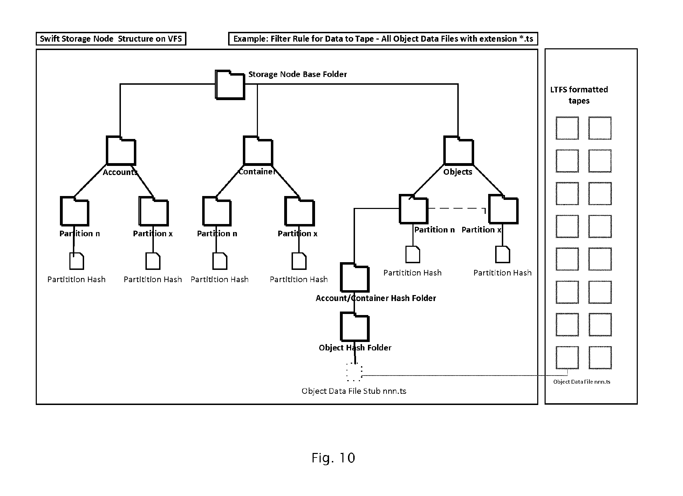

Fig. 10 shows a storage node structure where complete storage node file tree we be stored on tape;
Fig. 11 shows an index construct of the data partition of LTFS;
Fig. 12 shows an example of a data partition;
Fig. 13 shows a method to indentify corrupted blocks.

### Detailed Description of Preferred Embodiments

The invention and the various features and advantageous details thereof are explained more fully with reference to the none limiting embodiments that are illustrated in the accompanying drawings and detailed in the following description. Descriptions of well-known starting materials, processing techniques, components and equipment are omitted so as not to unnecessarily obscure the invention in detail. It should be understood, however, that the detailed description and the specific examples, while indicating preferred embodiments of the invention, are given by way of illustration only and not by way of limitation. Various substitutions, modifications, additions and/or rearrangements within the spirit and/or scope of the underlying inventive concept will become apparent to those skilled in the art from this disclosure. Embodiments discussed herein can be implemented in suitable computer-executable instructions that may reside on a computer readable medium (e.g., a hard disk drive, flash drive or other memory), hardware circuitry or the like, or any combination.

Before discussing specific embodiments, embodiments of a hardware architecture for implementing certain embodiments is described herein. One embodiment can include one or more computers communicatively coupled to a network, especially a fiber channel(FC), serial attached scsi (SAS), scsi (small computer system interface), iscsi (internet scsi). As is known to those skilled in the art, the computer can include a central processing unit ("CPU"), at least one read-only memory ("ROM"), at least one random access memory ("RAM"), at least one hard drive ("HD"), and one or more input/output ("I/O") device(s). The I/O devices can include a keyboard, monitor, printer, electronic pointing device (such as a mouse, trackball, stylist, etc.) or the like. In various embodiments, the computer has access to at least one database.

ROM, RAM, and HD are computer memories for storing computer-executable instructions executable by the CPU. Within this disclosure, the term "computer-readable medium" is not limited to ROM, RAM, and HD and can include any type of data storage medium that can be read by a processor. In some embodiments, a computer-readable medium may refer to a data cartridge, a data backup magnetic tape, a floppy diskette, a flash memory drive, an optical data storage drive, a CD-ROM, ROM, RAM, HD, or the like.

At least portions of the functionalities or processes described herein can be implemented in suitable computer-executable instructions. The computer-executable instructions may be stored as software code components or modules on one or more computer readable media (such as non-volatile memories, volatile memories, DASD arrays, magnetic tapes, floppy diskettes, hard drives, optical storage devices, etc. or any other appropriate computer-readable medium or storage device). In one embodiment, the computer-executable instructions may include lines of complied C++, Java, HTML, or any other programming or scripting code.

Additionally, the functions of the disclosed embodiments may be implemented on one computer or shared/distributed among two or more computers in or across a network. Communications between computers implementing embodiments can be accomplished using any electronic, optical, radio frequency signals, or other suitable methods and tools of communication in compliance with known network protocols. As used herein, the terms "comprises," "comprising," "includes," "including," "has," "having" or any other variation thereof, are intended to cover a non-exclusive inclusion. For example, a process, article, or apparatus that comprises a list of elements is not necessarily limited only those elements but may include other elements not expressly listed or inherent to such process, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms. Language designating such none limiting examples and illustrations include, but is not limited to: "for example," "for instance," "e.g.," "in one embodiment."
It will be recalled from the above discussion that in many instances it may be desired to provide a file system utilizing media libraries. To that end, attention is now directed to systems and methods for implementing a file system utilizing a tape library. In particular, embodiments may present a network based file system to one or more host devices. These host devices may utilize the network based file system to organize, store, read or perform other operations in association with files. These files may be managed in conjunction with a tape library. Specifically, commands in a network file system protocol may be received. These commands may be associated with operations to be performed on files, including operations associated with the organization, storage or retrieval of those files. Library control functionality that allows tapes in the tape library to be tracked and tapes to be moved into and out of drives and storage slots is utilized to manage the tape library such that those commands can be implemented in conjunction with the tape library.

In certain embodiments, LTFS may be employed in conjunction with the tape library such that the tapes in the tape library may be formatted using LTFS. Accordingly, operations with respect to the files on the tapes in the tape library may be performed using LTFS. A mapping may be maintained between the files visible through the networked based file system presented to the host devices and the corresponding location of those files on an LTFS tape in the tape library. Thus, when a command for an operation on a file is received from a host, the proper tape in the tape library can be located, placed in a drive and the LTFS file system on the tape mounted. The operation on the file can then be performed using LTFS. It should be noted here that while embodiments as discussed include a tape library having tapes formatted according to LTFS, other types of media libraries that utilize media of the same or different type where the media may be formatted according to the same or another type of file system may be employed in other embodiments.

Based on the fact that Swift Object Storage still is based on a random accessible file system to store its object data and tapes still are sequential media there is a need for a translating interface between both worlds.

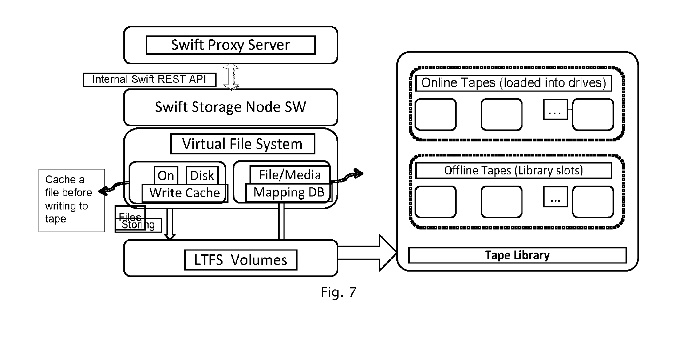

As shown in Fig. 7 the design of the invention has a number of the requirements for such a tape based storage device:
- Based on standard Linux Server OS
- Storing files on tape media
- Presenting a random file system to the connecting systems
- Transparent management of tape library operations
- Virtualization of single media
- Clustering multiple media to single media
- Use of proven tape file system LTFS to store and manage file based data on tape.

The concept is preferably based on the LTFS file system, which presents a tape volume as a normal file system folder where all standard file operations are supported against the OS and the user. To expose this file system with some major enhancements regarding usability and functional stability is one goal of the invention.

A component of the invention is its virtual file system VFS which controls the file and the cache management. Caching of data is a very important feature to fulfill the requirement for fast file access and to overcome the inherent delays of tape with long lead time for loading a tape and seeking sequentially on it. The VFS moves the files from the cache to the tape as quickly as possible based on set of rules to ensure high efficiency or restores the files from tape based on a read request if the files are moved out to the tape storage tier.

The invention is designed to run on a standard server HW running a standard Linux Server OS like SLES or RHEL other operating system can also be used. Depending on performance and storage requirements it will be configured with multiple TB of disk cache.

In a preferred embodiment the minimum size of the cache is larger than the expected maximum size of the largest object to be stored.

The system concept can also be used in an alternative possible embodiment a to provide both a network filesystem like NFS or CIFS as the backend and a "Pluggable On-Disk Back-end API" as the front end part for this new type of storage node.

There can be different variants and concepts to integrate the invention as the backend to tape library storage. This would also minimize the failure risk and test effort.

In a preferred embodiment of the invention, the standard implementation of the Swift Backend File System will still stay on the virtual file system (VFS). The complete folder and file structure will be kept without change. The only difference will be that the element data which has been marked by help of definable rules will be stored on tape. The metadatabase running on the virtual file system links to this data. Like that the original Swift structure will be kept unchanged to an external observer. In this case the file system structure looks logically the same as the standard, only the metadatabase link will be the difference.

The advantages would be:
- the default structure and behavior will not change.
- No generic modifications in the existing Swift "File System Back-End API" code is necessary.
- Individually definable rules allow setting up the system to its needs, not necessary slow tape operations can be avoided

The object auditing code for Swift is located in the following files:
swift/obj/auditor.py
swift/obj/diskfile.py

The auditing process itself can be controlled by two parameters:
Maximum files per second (default 20)
Maximum bytes per second (default 10MByte)

According to the OpenStack documentation, these two parameters should be tuned according to the individual system specs to not generate too much load on a storage node.

The auditing process for disk files will check the MD5 hash of the object data. The auditor process will open the object data file, calculate the MD5 hash while reading chunks of data (defined by the parameters listed above) and will close the file afterwards.

When closing the file, the file size and the MD5 hash is compared against the values stored in the object's meta data.

The class DiskFileReader is an implementation of the Pluggable On-Disk Back-end API and may be modified to support different backend types.

This leads to the following Implications of the auditing process.
The auditing process, as implemented for disk files, traverses all containers and inspects all object data files in those containers. This leads to a periodic access of all files on the storage node.

When data is going to be moved to tape, i.e. the object data is not available in the cache anymore, the data would first need to be read back to the cache and then be verified by the auditing process.

This would require to permanently reload all tapes, which is not feasible for a swift storage node.

The auditing method of the claimed invention will do auditing of files that are in cache as for the disk-based storage node (so code can be leveraged from disk-based implementation), and will in addition schedule a background check of all data written to tape.

The frequency of checks will influence the overall performance of the system, i.e. if only one or two drives are installed, a check of a tape can cause high latencies when a client tries to retrieve data from a different tape.

The invention uses as a possibility the VERIFY CDBs with the BYTECMP bit set to zero. According to the T10 SSC3 documentation the drive will then perform a verification of the logical blocks on the medium (see below).

A byte compare (BYTCMP) bit of zero specifies the verification shall be a verification of logical blocks on the medium (e.g., CRC, ECC). No data shall be transferred from the application client to the device server.

The proposed auditing method for tape-based storage nodes will have the following situation to handle:
- Standard auditing for files/objects still in cache (e.g. use default MD5 auditing method from disk handler)
- Cyclic auditing of files/objects that are stored only on tape

The cyclic auditing of files/objects only available on tape will be done as follows:
- Use the VERIFY SCSI command to perform a complete low-level check of all blocks or partial blocks on the tape
- If no error occurs, assume all files on the tape to be consistent
- If an error occurs, check the LTFS index for all files that are affected by the corrupt block(s) on the tape
- Create a stub-file/dummy-file in the cache for all these files (e.g. a file with just a few bytes of data and with its meta data to be able to indentified as the object but where the content is not consistent, and which triggers a replacement with a valid object/file)
- Once the files/objects are back in the cache, they will be audited by the object auditing process, which will detect that the files are corrupt (the calculated MD5 sum will not match the MD5 sum stored in the meta data, and the file size differs as well)
- The object auditor will put these files into quarantine and the object replicator will replace the files with valid copies from different storage nodes

This verification process makes use of the basic features already provided by Swift. The object auditor and object replicator will take care of replacing corrupt files.
The additional step that needs to be done is identifying files which are affected by corrupt blocks on the tape.

This will make the auditing process for files on tape completely idependant from the swift application itself. No SWIFT code amendment is necessary.

In the following some LTFS specific details for tape verification will be discussed, which are base on the LTFS specifiction.

The LTFS file system will generate two partitions on the tape, one data partition and one index partition.

The auditing process should audit the data partition, since real user data is stored in that partition.

Data placement policies allow storing data on the index partition as well, but the policy can be defined in such a way that no data is stored in the index partition.
If the index of an LTFS volume cannot be recovered, the ltfschk tool should be used to try to repair the index.

### LTFS data partition:

The LTFS data partition consists of data extents and index constructs. A Data Extent is a set of one or more sequential logical blocks used to store file data. The "blocksize" field of the LTFS Label defines the block size used in Data Extents. All records within a Data Extent must have this fixed block size except the last block, which may be smaller.

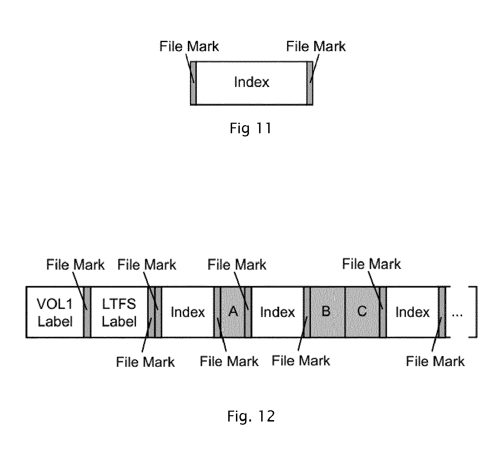

Index constructs are used to keep track of all files stored on the LTFS volume, and are surrounded by filemarks (see Fig. 11). An example of a data partition is shown in Fig. 12 (where A, B and C mark 3 files stored on the data partition).

Based on this information a index can be loaded into the memory of the device and the first blocks of a file/object can be fast determined.

In the following the SCC3 standard will be referenced.

The SCSI VERIFY command can be used in such a way, that no data needs to be transferred to the tape drive. A byte compare (BYTCMP) bit of zero specifies the verification shall be a verification of logical blocks on the medium (e.g., CRC, ECC).

A check condition for an incorrect length block for for a filemark can be detected by investigating the returned sense data.

The VERIFY(16) command requests that the device server verify one or more logical block(s) beginning at the logical object identifier and partition specified in the command descriptor block. Prior to performing the verify operation, the device server shall perform a synchronize operation.

An immediate (IMMED) bit of zero specifies the command shall not return status until the verify operation has completed. An IMMED bit of one specifies status shall be returned as soon as the command descriptor block has been validated, but after all verification data has been transferred from the application client to the device server, if the BYTCMP bit is one.

In order to ensure that no errors are lost, the application client should set the IMMED bit to zero on the last VERIFY(16) command when issuing a series of VERIFY(16) commands.

A byte compare (BYTCMP) bit of zero specifies the verification shall be a verification of logical blocks on the medium(e.g., CRC, ECC). No data shall be transferred from the application client to the device server.

A BYTCMP bit of one specifies the device server shall perform a byte-by-byte compare of the data on the medium and the data transferred from the application client. Data shall be transferred from the application client to the device server as in a WRITE(16) command. If the BYTCMP bit is one and the byte compare option is not supported, the device server shall terminate the command with CHECK CONDITION status, the sense key shall be set to ILLEGAL REQUEST, and the additional sense code shall be set to INVALID FIELD IN CDB.

The LOGICAL OBJECT IDENTIFIER and PARTITION fields specify the position where the VERIFY(16) command shall start. If the VERFICATION LENGTH field is not zero and the current logical position does not match the specified LOGICAL OBJECT IDENTIFIER and PARTITION fields, the device server shall perform a locate operation to the specified logical object identifier and partition prior to performing the verify operation. If the locate operation fails, the device server shall return CHECK CONDITION status and the additional sense code shall be set to LOCATE OPERATION FAILURE. The INFORMATION field in the sense data shall be set to the requested verification length. Following a locate operation failure the logical position is undefined.

The VERIFICATION LENGTH field specifies the amount of data to verify, in logical blocks or bytes, as specified by the FIXED bit. Refer to the READ (16) command for a description of the FIXED bit and any error conditions that may result from incorrect usage. If the VERIFICATION LENGTH field is zero, no data shall be verified and the current logical position shall not be changed. This condition shall not be considered an error.

The VERIFY(16) command shall terminate as follows:
a)when the verification length has been satisfied;
b)when an incorrect-length logical block is encountered;
c)when a filemark is encountered;
d)when end-of-data is encountered;
e)when the end-of-partition is encountered;
f)when early-warning is encountered (if the REW bit is one in the Device Configuration mode page,); or
g)when an unrecoverable read error is encountered.
The status and sense data for each of the termination conditions are handled in the same manner as in the READ(16) command. Upon successful completion of a VERIFY(16) command, the logical position shall be after the last logical block verified (i.e., end-of-partition side).

If the data does not compare (BYTCMP bit of one), the command shall terminate with CHECK CONDITION status, the sense data VALID bit shall be set to one, the sense key shall be set to MISCOMPARE, and the additional sense code shall be set to MISCOMPARE DURING VERIFY OPERATION. If the FIXED bit is one, the INFORMATION field shall be set to the requested verification length minus the actual number of logical blocks successfully verified. If the FIXED bit is zero, the INFORMATION field shall be set to the requested verification length minus the actual number of bytes successfully verified. This number may be larger than the requested verification length if the error occurred on a previous VERIFY(16) command with an IMMED bit of one. Upon termination, the medium shall be positioned after the logical block containing the miscompare (end-of-partition side).

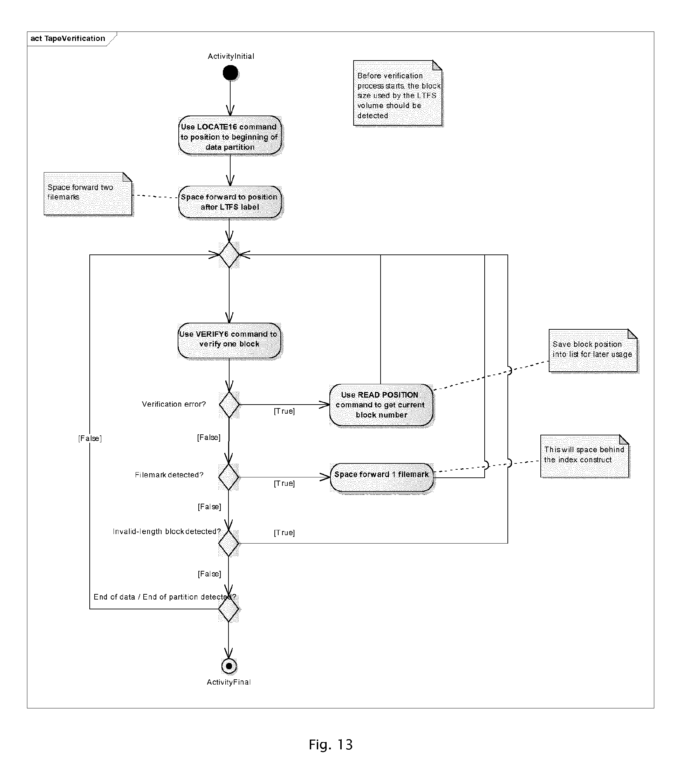

The activity diagram of Fig. 13 is a possible way to identify corrupted blocks.
The blocks that are identified using the technique described in Fig. 13 can then be mapped to files on the LTFS volume.

The figure describes, how stored objects will be parsed to create the complete index into a structure in memory.

This structure contains a linked list of the complete content of the index, including all files.
For each data extent, its starting block number is stored.

Parsing the complete linked list should allow to identify all data extents that are stored on a logical block. In this way a reverse look-up table is being created.

Knowing all data extents the filenames of all files that store data in those extents can be reconstructed.

## Claims

1. A system for providing a Swift Storage Node
comprising :
a)a media library, comprising:
- one or more drives;
- one or more tapes formatted according to the Linear Tape File System (LTFS); and
b) a management system connected over a first interface to the media library and over a second interface to a Swift Proxy Server, comprising a processor, a cache data store and a set of computer instructions executable on the processor to:
- provide a Swift-On-Disk File System Application Programming Interface (API) over the second external interface;
- use Virtual File System (VFS) based on the cache data store and the tapes with LTFS to be mapped to the Swift-On-Disk File standard, wherein swift objects are stored on the tapes using LTFS;
- enable the random access based Swift Auditor process for serial access based tape storage by bridging the SWIFT auditor by auditing the objects on tape by using the VERIFY SCSI command to complete a low-level check of blocks corresponding to the objects on the tape.

2. The system according to the preceding claim, wherein
If the VERIFY SCSI command generates an information that all blocks on the tape are defined as being consistent, the audit is successful and the system is configured to provide a corresponding response.

3. The system according to one or more of the preceding claims, being configured that if a bad block is determined, a LTFS index of the tape has to be analyzed to determine a file in which the object is stored corresponding to the corrupted block, and to create a stub-file corresponding the object in the cache data store to audit and replace the stub-file by a file with a consistent object in the cache data store by a replicator, and preferably being configured to copy the file with the consistent object to the tape.

4. The system according to one or more of the preceding claims, wherein the LTFS has two partitions on the tape, one data partition and one index partition, wherein the system is configure to use the VERIFY SCSI command on the data partition, where the object is stored.
The system according to claim 1, being configured to use the VERIFY SCSI command in a way, that no data needs to be transferred to the tape drive,
preferably the system is, configure to set a byte compare (BYTCMP) bit of zero, which specifies the verification is a verification of blocks on the medium comprising, CRC, ECC or other Verification methods.

5. The system according to one or more of the preceding claims, being configure to check condition for an incorrect length block for a file mark by investigating the returned sense data.

6. The system according to one or more of the preceding claims, wherein a LTFS index of a tape is stored in the memory of the management system, so that an access to at least a first block of each file storing an object on LTFS for the VERIFY SCSI command is possible.

7. The system according to one or more of the preceding claims, configured to unify by the VFS several LTFS on tapes and the cache data store as a one large unified storage area to provide this unified storage area to the Swift-On-Disk File standard;
preferably wherein the VFS consists of a VFS-metadatabase storing object identifications together with the location of the object on the tapes or the cache data store.

8. The system according to one or more of the preceding claims, configure to remove the objects in the cache data store being if a copy of the object is on the tapes and a cache-rule determines the object to be removed.

9. A method for implementing a Swift Storage Node
using
a)a media library, comprising:
- one or more drives;
- one or more tapes formatted according to the Linear Tape File System (LTFS); and using
b) a management system connected over a first interface to the media library and over a second interface to a Swift Proxy Server, comprising a processor, a cache data store and a set of computer instructions executable on the processor, comprising:
- providing a Swift-On-Disk File System Application Programming Interface (API) over the second external interface;
- using Virtual File System (VFS) base on the cache data store and the tapes with LTFS to be mapped to the Swift-On-Disk File standard, wherein swift objects are stored on the tapes using LTFS;
- performing the random access based Swift Auditor process for serial access based tape storage by bridging the SWIFT auditor by auditing the objects on tape by using the VERIFY SCSI command to complete a low-level check of blocks corresponding to the objects on the tape.

10. The method according to the preceding method claim , wherein
If the VERIFY SCSI command generates an information that all bocks on the tape are defined as being consistent, the audit is successful and providing a corresponding response.

11. The method according to one or more of the preceding method claims, wherein if a bad block is determined, analyzing a LTFS index of the tape to determine a LTFS-file in which the object is stored corresponding to the corrupted block, and creating a stub-file corresponding the object and the LTFS-file in the cache data store; auditing and replacing the stub-file by a file with a consistent object in the cache data store by a replicator, and preferably comprising the step copying the file with the consistent object to the tape.

12. The method according to one or more of the preceding method claims, wherein the LTFS has two partitions on the tape, one data partition and one index partition, wherein the VERIFY SCSI command is used on the data partition, where the object is stored, and preferably
wherein the VERIFY SCSI command is used in a way, that no data needs to be transferred to the tape drive.

13. The method according to claim 20, wherein the byte compare (BYTCMP) bit of zero is set, which specifies the verification is a verification of blocks on the medium comprising, CRC, ECC or other Verification methods;
and wherein preferably conditions for an incorrect length block for a file mark are checked by investigating the returned sense data.

14. The system according to one or more of the preceding method claims,
wherein a LTFS index of a tape is stored in the memory of the management system, so that an access to at least a first block of each file storing an object on LTFS for the VERIFY SCSI command is possible.

15. The method according to one or more of the preceding method claims,
wherein the VFS unifies several LTFS on tapes and the cache data store as a one large unified storage area to provide this unified storage area to the Swift-On-Disk File standard; and
wherein preferably the VFS consists of a VFS-table storing object identifications together with the location of the object on the tapes or the cache data store; and

16. The method according to one or more of the preceding method claims,
wherein the objects in the cache data store being removed if a copy of the object is on the tapes and a cache-rule determines the object to be removed.
